# EUROPÄISCHE PATENTSCHRIFT

(11) **EP 3 646 688 B1**
(45) Veröffentlichungstag und Bekanntmachung des Hinweises auf die Patenterteilung: **02.08.2023**
(21) Anmeldenummer: 19205396.5
(22) Anmeldetag: 25.10.2019
(51) Int. Cl.: A01B 23/04, A01B 63/22, A01B 73/04

(54) **LANDWIRTSCHAFTLICHES ANBAUGERÄT**
AGRICULTURAL CULTIVATION DEVICE
ACCESSOIRE AGRICOLE

(30) Priorität: 02.11.2018 DE 202018106264 U
(43) Veröffentlichungstag der Anmeldung: 06.05.2020
(73) Patentinhaber: PÖTTINGER Landtechnik GmbH, 4710 Grieskirchen (AT)
(72) Erfinder: BALDINGER, Friedrich, 4710 Grieskirchen (AT); BAUMGARTNER, Lukas, 4710 Grieskirchen (AT); KALTSEISS, Martin, 4710 Grieskirchen (AT); LEHNER, Thomas, 4710 Grieskirchen (AT)
(74) Vertreter: Thoma, Michael

(56) Entgegenhaltungen:
- EP-A1- 0 857 413
- EP-B1- 2 418 930
- WO-A1-2005/115124
- CA-A1- 2 210 231
- DE-A1- 2 002 746
- US-A1- 2018 295 769

## Beschreibung

Die vorliegende Erfindung betrifft ein landwirtschaftliches Anbaugerät, insbesondere Bodenbearbeitungsgerät, mit einem zentralen Maschinenrahmen, der an einem hinteren Rahmenteil durch ein Fahrwerk mit mehreren Radachsen am Boden abgestützt ist und an einem vorderen Rahmenteil mit einer Anbauvorrichtung, insbesondere Deichsel, zum Anbau an einen Schlepper verbunden ist, wobei an dem hinteren Rahmenteil ein Querrahmen angebracht ist, der zumindest eine Reihe von Arbeitsaggregaten trägt und um eine Wippachse aufwippbar gelagert ist.

Landwirtschaftliche Anbaugeräte mit sehr großen Arbeitsbreiten werden öfters als Aufsattelgeräte ausgebildet, bei denen ein länglicher, sich zumindest näherungsweise in Fahrtrichtung erstreckender Maschinenrahmen an einem hinteren Rahmenteil durch ein mehrachsiges Fahrwerk am Boden abgestützt wird. Der Maschinenrahmen wird an seinem vorderen Ende über eine Deichsel oder eine andere Anbauvorrichtung am Kuppelpunkt des Schleppers angehängt, wodurch sich in Verbindung mit dem genannten mehrachsigen Fahrwerk ein stabiles Fahrverhalten ergibt und in der Transportstellung das gesamte Gewicht der Arbeitsaggregate unter Beachtung der zulässigen Achslasten getragen werden kann. Um den seitlich rechts und links in der Arbeitsstellung quer zur Fahrtrichtung weit auskragenden Querrahmen und die daran aufgehängten Arbeitsaggregate einklappen bzw. an den Maschinenrahmen anklappen zu können, wird gerne ein zweistufiger Klappprozess ausgeführt, gemäß dem zuerst der gesamte, noch quer auskragende Querrahmen um eine liegende, sich quer zur Fahrtrichtung erstreckende Wippachse um etwa 90° aufgewippt wird. Der hierfür vorgesehene Wippantrieb kann beispielsweise einen Aufwippzylinder umfassen, der einerseits am zentralen Maschinenrahmen angelenkt und andererseits an einem zentralen Querrahmenteil bzw. einem damit starr verbundenen Aufwippbock angelenkt sein kann.

Ist der Querrahmen in der genannten Weise aufgewippt bzw. nach oben geklappt, können die seitlich auskragenden Querrahmenteile bzw. die Flügelteile des Querrahmens um Klappachsen nach vorne oder nach hinten geklappt werden, um sich näherungsweise parallel zum zentralen Maschinenrahmen zu erstrecken. Die genannten Klappachsen erstrecken sich in der abgesenkten Arbeitsstellung des Querrahmens liegend näherungsweise fahrtrichtungsparallel, während sich die Klappachsen nach dem Aufwippen des Querrahmens näherungsweise aufrecht erstrecken, sodass in der zweiten Stufe des Einklappprozesses die Querrahmenteile um aufrechte Achsen eingeklappt werden. Dabei können für die linken und rechten Querrahmenteile jeweils eine solche Klappachse, jedoch auch jeweils mehrere Klappachsen voneinander beabstandet vorgesehen sein, um die seitlichen Querrahmenflügel entweder als Ganzes nach vorne oder hinten zu klappen oder mehrfach zusammenzuklappen, wenn dies die Arbeitsaggregate zulassen. Den genannten Klappachsen ist dabei üblicherweise jeweils ein Klappantrieb beispielsweise in Form eines oder mehrerer Klappzylinder zugeordnet, um die Querrahmenteile ein- und ausklappen zu können.

In der Arbeitsstellung und auch in der vollständig eingeklappten Transportstellung ergibt sich durch das mehrachsige Fahrwerk, welches den Maschinenrahmen am Boden abstützt, üblicherweise ein stabiles Fahrverhalten, wobei in der abgesenkten Arbeitsstellung das genannte Fahrwerk gegebenenfalls auch entlastet sein kann, wenn der Querrahmen mit den Arbeitsaggregaten aktiv nach unten gegen den Boden gedrückt wird, wenn als Arbeitsaggregate Bodenbearbeitungswerkzeuge eingesetzt und das Anbaugerät als Bodenbearbeitungsgerät ausgebildet ist. Der Querrahmen kann dabei durch ein eigenes Tastfahrwerk in Form von Tasträdern oder anderen Fahrwerkselementen am Boden abgestützt sein, um das gewünschte Arbeitsergebnis und die gewünschte Arbeitstiefe zu erzielen.

Ein instabiles Fahrverhalten kann sich indes in der ersten Phase des genannten Einklappprozesses ergeben, wenn der Querrahmen aufgewippt wird, jedoch noch nicht nach vorne in eine fahrtrichtungsparallele Stellung eingeklappt ist. Beim Aufwippen des Querrahmens mit den daran angelenkten Arbeitsaggregaten liegt der Schwerpunkt des Querrahmens und aller daran angelenkten Arbeitsaggregate nämlich noch sehr weit hinten, sodass sich an der Deichsel bzw. an der Anlenkvorrichtung negative Stützlasten ergeben können, die den Schlepper an dessen Hinterachse entlasten. Hierdurch leidet nicht nur die Traktion des Schleppers, sondern auch dessen Spurstabilität. Solche negativen Stützlasten am Kupplungspunkt des Schleppers werden umso größer, je höher das durch die Gewichtskraft des Querrahmens und der daran befestigten Arbeitsaggregate erzeugte Moment um den Abstützpunkt des Fahrwerks wird. Je größer das Anbaugerät und je größer dessen Arbeitsbreite wird, umso größer wird beim Aufwippen das Gewicht des Querrahmens und der daran befestigten Arbeitsaggregate, das sich am zentralen Maschinenrahmen abstützt und das genannte Moment bewirkt. Insofern ergeben sich insbesondere bei Anbaugeräten mit sehr großen Arbeitsbreiten und hohem Gewicht der Arbeitsaggregate entsprechende Probleme.

Aus der Schrift EP 0 857 413 A1 ist ein Kreiselschwader bekannt, dessen Rechkreisel durch ein Pendelfahrwerk abgestützt ist. Um für den Transport die Rechkreisel anzuheben und mehr Bodenfreiheit zu erzeugen, wird für den Straßentransport der Achsträger verkippt, um die hintere Radachse abzusenken und die vordere Radachse anzuheben.

Die Schrift DE 200 27 46 A zeigt ein ähnliches Verkippen der Fahrwerksachsen des Tastfahrwerks unter dem Rechkreisel eines Zetters.

Die Schrift US 2018/0295769 zeigt ein Bodenbearbeitungsgerät, bei dem ein Bodenbearbeitungswerkzeuge tragendes Rahmenteil aus einer abgesenkten, nachlaufenden Arbeitsstellung in eine aufrecht stehende Transportstellung über dem Maschinenrahmenfahrwerk schwenkbar ist.

Die Schrift WO 2005/115124 A1 zeigt ein Bodenbearbeitungsgerät, dessen zentraler Maschinenrahmen an einem hinteren Rahmenteil durch ein Fahrwerk am Boden abgestützt ist, wobei an dem Maschinenrahmen zwei Querrahmen angebracht sind, die jeweils Bodenbearbeitungswerkzeuge tragen und in der abgesenkten Arbeitsstellung seitlich quer zur Fahrtrichtung vom Maschinenrahmen auskragen. Für den Straßentransport sind die beiden Querrahmen jeweils um eine fahrtrichtungsparallele Schwenkachse in eine aufrechte Transportstellung schwenkbar.

Ferner zeigt die Schrift EP 24 18 930 B1 ein landwirtschaftliches Bodenbearbeitungsgerät mit klappbaren Seitenflügeln, bei dem ein den zentralen Rahmenteil tragendes Fahrwerk drei Achsen aufweist, die an zwei schwenkbaren Achsträgern angeordnet sind. Dabei fährt einer der beiden schwenkbaren Achsträger beim vollständigen Absenken des Fahrwerks gegen einen Anschlag, der eine Schwenkbewegung des Achsträgers in eine Schwenkrichtung blockiert, so dass nur noch der andere Achsträger mit den beiden daran befestigten Radachsen frei schwenkbar bleibt.

Der vorliegenden Erfindung liegt hiervon ausgehend die Aufgabe zugrunde, ein verbessertes landwirtschaftliches Anbaugerät der eingangs genannten Art zu schaffen, das Nachteile des Standes der Technik vermeidet und letzteren in vorteilhafterweise weiterbildet. Insbesondere soll auch beim Aufwippen des Querrahmens in die Vorgewendestellung und/oder zur Transportstellung hin ein instabiles Fahrverhalten des Anbaugeräts und auch ein instabiles Fahrverhalten des Schleppers durch negative Stützlasten vermieden werden.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, beim Aufwippen des Querrahmens das Fahrwerk zu verstellen, um den Hebelarm der Gewichtskraft des Querrahmens und der daran angelenkten Arbeitsaggregate bezüglich des Aufstandspunkts des Fahrwerks zu verkürzen. Das Fahrwerk wird dabei so verstellt, dass eine hintere bzw. näher am Querrahmen liegende Radachse mehr Last trägt als eine vordere bzw. weiter vom Querrahmen entfernte Radachse. Hierdurch können negative Stützlasten der Anbauvorrichtung am Kupplungspunkt des Schleppers vermieden bzw. zumindest stark reduziert werden, sodass ein instabiles Fahrverhalten vermieden werden kann.

Erfindungsgemäß ist dem Fahrwerk, das den zentralen Maschinenrahmen am Boden abstützt, eine Verstellvorrichtung zugeordnet, die in Abhängigkeit einer Stellung und/oder Betätigung des Querrahmens arbeitend dazu ausgebildet ist, beim Aufwippen des Querrahmens eine ungleiche Achslastverteilung vorzusehen und eine hintere und/oder näher am Querrahmen liegende Radachse stärker zu belasten als eine vordere und/oder entfernter vom Querrahmen liegende Radachse.

Insbesondere kann zumindest eine der Radachsen anhebbar und absenkbar ausgebildet sein, um die genannte ungleiche Achslastverteilung zu erzielen und/oder eine der Radachsen zum fixen Aufstandspunkt zu machen, relativ zu dem sich der Hebelarm der Gewichtskraft des aufgewippten Querrahmens mit den daran angebrachten Arbeitsaggregaten bestimmt. Beispielsweise kann die hintere Radachse abgesenkt und/oder die vordere Radachse angehoben werden, um die sich beim Aufwippen ergebende Gewichtslast, die vom Querrahmen her in den Maschinenrahmen eingeleitet wird, im Wesentlichen vollständig oder zumindest zu einem großen Teil über die hintere Radachse abzustützen. Die genannte Verstellvorrichtung kann die genannte Fahrwerksverstellung vorübergehend vorsehen, insbesondere im Wesentlichen nur während des Aufwippens des Querrahmens, bis die seitlichen Klappteile des Querrahmens in die näherungsweise fahrtrichtungsparallele Transportstellung angeklappt sind. Ist die Transportstellung vollständig erreicht und/oder ist der Querrahmen noch in seiner Arbeitsstellung, kann die Fahrwerksverstellung deaktiviert bzw. das Fahrwerk zu eingestellt werden, dass die Last gleichmäßig auf die mehreren Radachsen verteilt wird.

In Weiterbildung der Erfindung kann das Fahrwerk als Pendelfahrwerk ausgebildet sein, dessen die Radachsen tragender Achsträger pendelnd am Maschinenrahmen oder einem damit verbundenen Aufhängungsteil angelenkt ist, sodass der genannte Achsträger, der sich näherungsweise liegend und fahrtrichtungsparallel erstrecken kann, auf und nieder wippen kann. Ein solches bisweilen auch als Bogey-Fahrwerk bezeichnetes Pendelfahrwerk kann durch die Pendel- bzw. Wippbewegungen des Achsträgers die Lasten normalerweise sehr gleichmäßig auf beide Radachsen verteilen, auch wenn Bodenwellen überfahren oder in unebenem Gelände gearbeitet wird.

Allerdings ergibt sich bei einem solchen Pendelfahrwerk die eingangs erläuterte Problematik in an sich verschärfter Form, da üblicherweise die Gewichtslast, die sich beim Aufwippen des Querrahmens am zentralen Maschinenrahmen abstützt, nicht über die am nächsten beim Querrahmen liegende Radachse abgetragen wird, sondern im Bereich der Pendelachse zwischen den Radachsen, wodurch sich ein recht langer Hebelarm ergibt. Um diese Problematik zu lösen, kann die genannte Verstellvorrichtung zum Verstellen des Fahrwerks beim Aufwippen die Pendelachse bzw. die Pendelbewegung des Achsträgers sperren, um zu erreichen, dass die näher am Querrahmen liegende Radachse stabil gehalten wird und einen großen Teil der Last abtragen kann.

Dabei kann der Achsträger des Pendelfahrwerks in eine vorbestimmte Pendelstellung geschwenkt und dort gehalten werden, in der die genannte Radachse, die am nächsten am Querrahmen liegt, ein Stück weit abgesenkt ist und gleichzeitig die weiter entfernte Radachse ein Stück weit angehoben ist, um die ungleiche Lastverteilung zu erzielen. Insbesondere kann der Achsträger von einem Stellaktor im Aufwippmodus, in dem der Querrahmen aufgewippt wird, mit seinem hinteren Achsträgerteil ein Stück weit nach unten geschwenkt werden, sodass die hintere Radachse des Pendelfahrwerks die Gewichtslast trägt und die vordere Radachse des Pendelfahrwerks entlastet wird.

Ein hierfür geeigneter Stellaktor kann beispielsweise ein Druckmittelzylinder sein, der einerseits an dem Achsträger angelenkt ist und andererseits von der Pendelachse beabstandet am Maschinenrahmen bzw. einem damit verbundenen Aufhängungsteil angelenkt ist, sodass eine Verstellung des Druckmittelzylinders eine Verschwenkung des Achsträgers bewirkt.

Im normalen Betrieb, in dem das Pendelfahrwerk pendeln können soll, kann der genannte Druckmittelzylinder in eine Schwimmstellung geschaltet sein, sodass sich der Druckmittelzylinder längen und verkürzen kann und dabei im Wesentlichen nur den Strömungswiderstand überwinden muss. Der Achsträger des Pendelfahrwerks kann dabei frei hin- und herpendeln und wird von dem genannten Druckmittelzylinder in den Pendelbewegungen gedämpft, sodass der Druckmittelzylinder vorteilhafterweise gleichzeitig einen Dämpfer für das Pendelfahrwerk bilden kann.

Im Aufwippmodus wird der genannte Druckmittelzylinder mit Druckmittel beaufschlagt, um eine gewünschte Stellung anzufahren, in der der Achsträger in die gewünschte Pendelstellung gefahren ist. Ist dies gleichzeitig die Endstellung des Druckmittelzylinders, könnte einfach die Druckbeaufschlagung aufrechterhalten werden, um die Aufwippstellung des Achsträgers festzustellen. Ist dies noch eine Mittelstellung des Druckmittelzylinders, kann der Druckmittelzylinder verriegelt werden, indem Zufluss und/oder Abfluss verriegelt werden.

Der genannte Druckmittelaktor kann insofern gleichzeitig als Stellaktor zum Anfahren einer abgesenkten Stellung der einen Radachse und/oder angehobenen Stellung der anderen Radachse verwendet werden und gleichzeitig als Pendelsperre dienen, um ein Pendeln des Pendelfahrwerks beim Aufwippen des Querrahmens zu verhindern.

Die Steuervorrichtung zum Ansteuern des genannten Stellaktors und/oder der genannten Pendelsperre kann dabei grundsätzlich unterschiedlich ausgebildet sein, wobei beispielsweise eine Erfassungseinrichtung zum Erfassen des Aufwippvorgangs des Querrahmens vorgesehen sein kann, sodass die genannte Steuervorrichtung in Abhängigkeit eines Signals der genannten Erfassungseinrichtung, welches das Aufwippen des Querrahmens angibt, arbeiten kann. Werden elektrische Aktoren zum Verstellen des Fahrwerks vorgesehen, kann eine entsprechend elektronisch arbeitende Steuervorrichtung ausgebildet sein und die elektrischen Stellaktoren entsprechend ansteuern.

Alternativ oder zusätzlich kann auch eine Folgesteuerung vorgesehen werden, bspw. dergestalt, daß auf einen Eingabebefehl zum Aufwippen der Arbeitsaggregate in die Vorgewende- und /oder Transportstellung zunächst das Fahrwerk verstellt und dann im nächsten Schritt der Wippantrieb zum Aufwippen des Querrahmens betätigt wird.

Wird in der vorgenannten Weise ein hydraulischer Druckmittelaktor zum Verstellen des Fahrwerks vorgesehen, kann die genannte Steuervorrichtung eine Drucksteuervorrichtung umfassen, die die Druckbeaufschlagung des Druckmittelaktors steuert.

Vorteilhafterweise kann der Stellaktor und/oder die Pendelsperre der Fahrwerksverstellung in Abhängigkeit des Betriebszustands eines Aufwippantriebs arbeiten, mittels dessen der Querrahmen gegenüber dem zentralen Maschinenrahmen aufgewippt werden kann. Ein den Betrieb des genannten Aufwippantriebs charakterisierendes Betriebssignal und/oder eine entsprechende Betriebsgröße kann als Steuersignal für die Verstelleinrichtung zum Verstellen des Fahrwerks genutzt werden.

Der genannte Aufwippantrieb zum Aufwippen des Querrahmens kann beispielsweise einen hydraulischen oder pneumatischen Aufwippzylinder umfassen. In diesem Fall kann der Druckmittelaktor, mithilfe dessen das Fahrwerk verstellt werden kann, an den Druckkreis angebunden werden, mit dem der genannte Aufwippzylinder druckbeaufschlagt wird.

Insbesondere kann eine Drucksteuervorrichtung zum Betätigen des Druckmittelaktors der Fahrwerksverstellung in Abhängigkeit eines Drucks arbeiten, mit dem der genannte Aufwippzylinder zum Aufwippen des Querrahmens beaufschlagt wird.

Die genannte Drucksteuervorrichtung kann beispielsweise einen Druckabschalter und/oder -begrenzer insbesondere in Form eines Druckbegrenzungsventils aufweisen, welches den Druck zum Aufwippen des Querrahmens gleichzeitig oder auch vorher schon auf den Druckmittelaktor der Fahrwerksverstellung gibt, um die hintere Radachse abzusenken und die Pendelbewegung zu sperren.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung eines landwirtschaftlichen Anbaugeräts in einer Perspektive schräg von hinten gemäß einer vorteilhaften Ausführung der Erfindung, wobei das Anbaugerät als Bodenbearbeitungsgerät ausgebildet ist und der die Arbeitsaggregate tragende Querrahmen in seiner ausgeklappten, abgesenkten Arbeitsstellung gezeigt ist,
- Fig. 2:: eine perspektivische Darstellung des Bodenbearbeitungsgeräts aus Figur 1 in einer Perspektive schräg von vorne, die das Pendelfahrwerk zeigt, das den Maschinenrahmen am Boden abstützt, und
- Fig. 3:: eine Seitenansicht des Bodenbearbeitungsgeräts aus Figur 1, wobei die Drucksteuervorrichtung zum Steuern der Druckbeaufschlagung des Stellaktors der Fahrwerksverstellung schematisch dargestellt ist.

Wie die Figuren zeigen, umfasst das landwirtschaftliche Anbaugerät 1 einen länglichen, sich näherungsweise in Fahrtrichtung erstreckenden zentralen Maschinenrahmen 2, der an einem hinteren Rahmenabschnitt 2h durch ein Fahrwerk 3 am Boden abgestützt ist. An einem vorderen Rahmenabschnitt 2v ist der Maschinenrahmen 2 mit einer Anbauvorrichtung 4 versehen, mittels derer das Anbaugerät 1 an einen nicht dargestellten Schlepper angebaut werden kann. Die genannte Anbauvorrichtung 4 kann insbesondere eine Deichsel 5 umfassen, die gelenkig am Kuppelpunkt des Schleppers angelenkt werden kann.

Am hinteren Rahmenabschnitt 2h des zentralen Maschinenrahmens 2 ist ein Querrahmen 6 angelenkt, der sich, wie die Figuren zeigen, in der Arbeitsstellung quer zur Fahrtrichtung erstreckt und mehrere Reihen von Arbeitsaggregaten 7 trägt, die die bestimmungsgemäße landwirtschaftliche Funktion des Anbaugeräts 1 ausführen. Die genannten Arbeitsaggregate 7 können insbesondere Bodenbearbeitungswerkzeuge umfassen, beispielsweise in Form der in den Figuren gezeigten Scharscheiben, die in zwei Reihen hintereinander angeordnet sind und gegenläufig schräg angestellt sein können. Die genannten Scharscheiben können in an sich bekannter Weise über Scheibentragarme an dem Querrahmen 6 aufgehängt sein, wobei sich solche Scheibentragarme schräg nach hinten unten erstrecken können.

Ferner kann an dem Querrahmen 6 eine Nachläufer- bzw. Nachbearbeitungseinheit angebracht sein, beispielsweise in Form einer Rillenwalze oder je nach Ausbildung des Anbaugeräts auch in Form einer anderen Bodenbearbeitungseinrichtung.

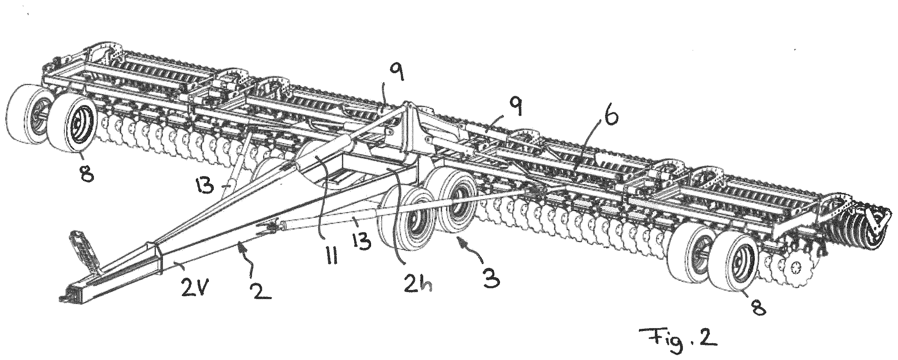

Wie Figur 2 zeigt, können äußere Rahmenabschnitte 6a des Querrahmens 6 über jeweils ein Tastfahrwerk 8 am Boden abgestützt sein.

Der Querrahmen 6 kann in mehrere Rahmenabschnitte untergliedert sein, die miteinander gelenkig verbunden sind, wobei sich Klappachsen 9 zum Verbinden der Querrahmenteile in der abgesenkten Arbeitsstellung näherungsweise liegend in Fahrtrichtung erstrecken können. Über Stellaktoren 9 können die Querrahmenteile zueinander eingeklappt bzw. in der Arbeitsstellung in der gewünschten ausgestreckten Relativstellung gehalten werden.

Der Querrahmen 6 ist an dem hinteren Rahmenabschnitt 2h des zentralen Maschinenrahmens 2 wippbar angelenkt, wobei sich die Wippachse 10 liegend quer zur Fahrtrichtung erstrecken kann, um den Querrahmen 6 aus der in den Figuren gezeigten Arbeitsstellung mit samt daran angebrachten Arbeitsaggregaten 7 nach vorne aufwippen zu können.

Als Wippantrieb kann ein Hydraulikzylinder 11 vorgesehen sein, der einerseits an dem zentralen Maschinenrahmen 2 und andererseits an einem zentralen Rahmenteil des Querrahmens 6 bzw. einem damit starr verbundenen Aufwippbock 12 angelenkt sein kann.

Mittels der beschriebenen Kinematik kann der Querrahmen 6 aus der in den Figuren gezeigten Arbeitsstellung zunächst um die genannte Wippachse 10 um näherungsweise etwa 90° aufgewippt werden, sodass sich die zuvor genannten Klappachsen zwischen den Querrahmenteilen aufrecht erstrecken. Mittels der Stellaktoren 9 kann dann der Querrahmen 6 eingeklappt und in eine näherungsweise fahrtrichtungsparallele Transportstellung verbracht werden.

Um die im Arbeitsbetrieb zum Teil beträchtlichen Zugkräfte in den Querrahmen 6 nicht nur über den hinteren Rahmenabschnitt 2h des zentralen Maschinenrahmens 2 in den zentralen bzw. mittleren Abschnitt des Querrahmens 6 einzuleiten, sondern besser zu verteilen und auch direkt in weiter außen liegende Abschnitte des Querrahmens 6 einzuleiten, sind ferner zwei Diagonalstreben 13 vorgesehen, die mit ihrem hinteren Ende an dem Querrahmen 6 angelenkt sind und mit ihrem vorderen Ende an einem vorderen Rahmenabschnitt 2v des zentralen Maschinenrahmens 2 angelenkt sind. Der genannte vordere Rahmenabschnitt 2v liegt insbesondere vor dem Fahrwerk 3 des Maschinenrahmens 2 und kann einen vorderen Endabschnitt des besagten Maschinenrahmens 2 bilden. Gegebenenfalls können die Diagonalstreben 13 auch an der Anbauvorrichtung 4, insbesondere an der Deichsel 5 angelenkt sein.

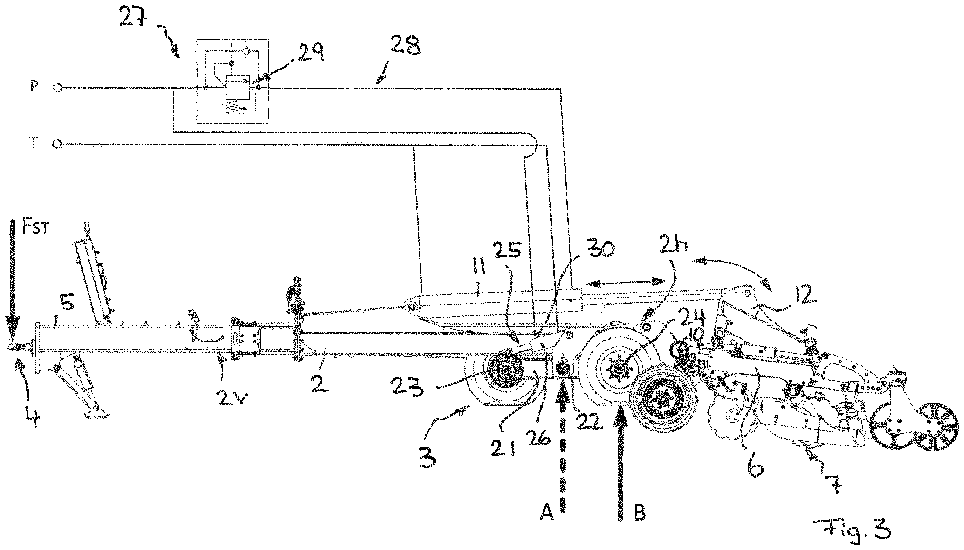

Wie insbesondere Figur 3 zeigt, ist das Fahrwerk 3, das den hinteren Rahmenabschnitt 2h des Maschinenrahmens 2 abstützt, als Pendelfahrwerk ausgebildet. Ein länglicher, sich näherungsweise liegend in Fahrtrichtung erstreckender Achsträger 21 ist schwenkbar an einer Pendelachse 22 gelagert, die am Maschinenrahmen 2 starr befestigt oder auch an einem damit verbundenem Aufhängungsteil angebracht sein kann, wobei die Pendelachse 22 gegebenenfalls auch beweglich aufgehängt sein kann, beispielsweise um eine Stoßdämpfung zu ermöglichen oder eine Höhenverstellung vorzusehen. Der genannte Achsträger 21 kann starr ausgebildet sein, gegebenenfalls aber auch aus zwei zueinander verschwenkbaren Achsträgerteilen bestehen, um auf diese Weise eine Höhenverstellung zu ermöglichen.

Wie Figur 3 zeigt, erstreckt sich die genannte Pendelachse 22 liegend quer zur Fahrtrichtung und kann dabei etwas mittig zwischen der vorderen Radachse 23 und der hinteren Radachse 24 angeordnet sein.

Eine Verstellvorrichtung 25 zum Verstellen des Fahrwerks 3 umfasst vorteilhafterweise einen Stellaktor 26, mittels dessen der genannte Achsträger 21 verschwenkt und vorteilhafterweise auch verriegelt werden kann. Beispielsweise kann der genannte Stellaktor 26 als Druckmittelzylinder ausgebildet sein, welcher einerseits an dem Achsträger 21 angelenkt und andererseits von der Pendelachse 22 beabstandet am Maschinenrahmen 2 oder einem damit verbundenen Aufhängungsteil angelenkt sein kann. Wird der genannte Stellaktor 26 betätigt, verschwenkt der Achsträger 21. Wird der Stellaktor 26 blockiert oder verriegelt, kann der Achsträger 21 nicht mehr pendeln.

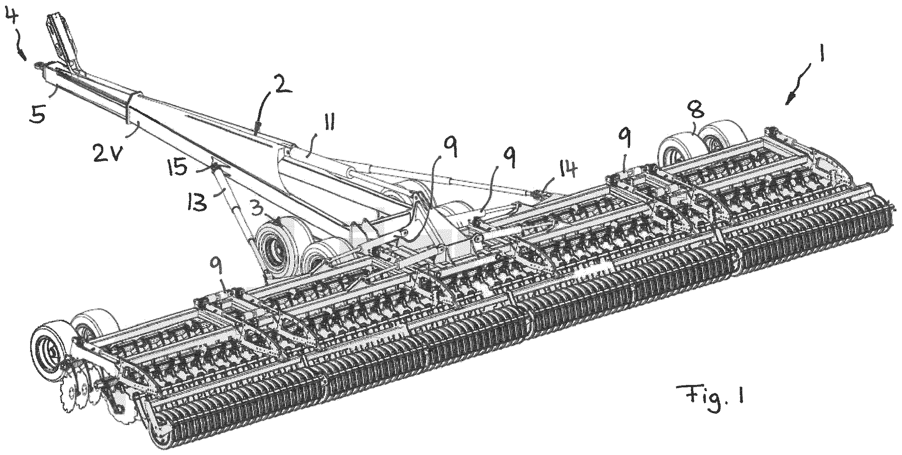

Wie sich aus den Figuren 1 bis 3 ergibt, wird zum Verbringen des Querrahmens 6 und der daran angelenkten Arbeitsaggregate 7 der genannte Querrahmen 6 zunächst um die liegende, sich quer zur Fahrtrichtung erstreckende Wippachse 10 aufgewippt, was durch Betätigung des Hydraulikzylinders 11 erfolgen kann. Der Querrahmen 6 kann hierdurch insgesamt um etwa 90° nach vorne aufgeklappt werden, sodass sich die Klappachsen zwischen den Querrahmenteilen bzw. - abschnitten im Wesentlichen aufrecht erstrecken. In dieser aufgewippten Zwischenstellung werden sodann die Klappantriebe in Form der Klappzylinder betätigt, um die seitlichen Flügel des Querrahmens 6 nach vorne an den Maschinenrahmen 2 anzuklappen und gegebenenfalls dabei auch nochmals um 180° zusammenzufalten, um die Länge insgesamt zu verkürzen.

Für das genannte Aufwippen des Querrahmens 6 wird das Fahrwerk 3 verstellt, in dem die Verstellvorrichtung 25 den Stellaktor 26 betätigt. Insbesondere wird der in Figur 3 gezeigte Stellaktor verkürzt, um die vordere Radachse 23 aufzuwippen und die hintere Radachse 24 abzuwippen. Der Stellaktor 26 wird dann in der genannten Aufwippstellung fixiert, beispielsweise indem die Zu- und Abflüsse der Druckkammern des Aktors abgesperrt werden. Alternativ kann es auch ausreichend sein, eine Endstellung anzufahren. Wiederum alternativ können auch andere Verriegelungsmittel vorgesehen sein, um die erreichte Pendelstellung zu fixieren.

Wie Figur 3 zeigt, kann eine Steuervorrichtung 27 zum Steuern des Stellaktors 26 eine Drucksteuervorrichtung 28 umfassen, die die Druckbeaufschlagung des Stellaktors 27 steuert.

Über die Drucksteuervorrichtung 28 kann der genannte Stellaktor 27 insbesondere an den Aufwippzylinder 11 bzw. den diesen versorgenden Druckkreis angebunden werden.

Der Drucksteuerkreis 28 kann eine Ventileinrichtung 30 umfassen, beispielsweise in Form eines Drucksteuerventils, welches die Druckbeaufschlagung auf den genannten Stellaktor 27 der Fahrwerksverstellung so steuert, dass der Stellaktor 27 in seine Aufwippstellung fährt, in der die hintere Radachse 24 abgesenkt ist, wenn der Aufwippzylinder 11 druckbeaufschlagt wird, um den Querrahmen 6 aufzuwippen.

## Patentansprüche

1. Landwirtschaftliches Anbaugerät, insbesondere Bodenbearbeitungsgerät, mit einem zentralen Maschinenrahmen (2), der an einem hinteren Rahmenteil (2h) durch ein Fahrwerk (3) mit mehreren Radachsen (23, 24) am Boden abgestützt ist und an einem vorderen Rahmenteil (2v) mit einer Anbauvorrichtung (4), insbesondere Deichsel (5), zum Anbauen an einen Schlepper verbunden ist, wobei an dem hinteren Rahmenteil (2h) ein Querrahmen (6) angebracht ist, der zumindest eine Reihe von Arbeitsaggregaten (7) trägt und aus einer abgesenkten Arbeitsstellung, in der der Querrahmen (6) seitlich quer zur Fahrtrichtung auskragt, um eine liegende Wippachse (10) gegenüber dem Maschinenrahmen (2) aufwippbar und um eine aufrechte Klappachse in eine etwa fahrtrichtungsparallele Transportstellung an den Maschinenrahmen (2) einklappbar ist, wobei dem Fahrwerk (3) eine Verstellvorrichtung (25) zugeordnet ist, die in Abhängigkeit einer Betätigung und/oder Stellung des Querrahmens (6) arbeitend dazu ausgebildet ist, das Fahrwerk (3) zu verstellen und eine hintere, näher am Querrahmen (6) liegende Radachse (24) zum fixen Aufstandspunkt zu machen, um beim Aufwippen und Einklappen des Querrahmens (6) eine ungleiche Achslastverteilung vorzusehen und die hintere, näher am Querrahmen (6) liegende Radachse (24) stärker zu belasten als eine vordere, entfernter vom Querrahmen (6) liegende Radachse (23).

2. Landwirtschaftliches Anbaugerät nach dem vorhergehenden Anspruch, wobei die Verstellvorrichtung (25) dazu ausgebildet ist, die ungleiche Achslastverteilung nur vorübergehend während des Aufwippens und Einklappens des Querrahmens (6) in die Transportstellung vorzusehen, und in der vollständig erreichten Transportstellung des Querrahmens (6) eine gleichmäßige Lastverteilung auf die mehreren Radachsen (23, 24) vorzusehen.

3. Landwirtschaftliches Anbaugerät nach einem der vorhergehenden Ansprüche, wobei zumindest eine der Radachsen (23, 24) anhebbar und absenkbar gelagert ist und die Verstellvorrichtung (25) dazu ausgebildet ist, beim Aufwippen des Querrahmens (6) die genannte Radachse anzuheben und/oder die andere Radachse abzusenken.

4. Landwirtschaftliches Anbaugerät nach einem der vorhergehenden Ansprüche, wobei das Fahrwerk (3) als Pendelfahrwerk ausgebildet ist, dessen die Radachsen (23, 24) tragender Achsträger (21) pendelnd am Maschinenrahmen (2) angelenkt ist, wobei die Verstellvorrichtung (25) eine Pendelsperre (30) zum Sperren der Pendelbewegung des Achsträgers (21) aufweist.

5. Landwirtschaftliches Anbaugerät nach dem vorhergehenden Anspruch, wobei die Verstellvorrichtung (25) einen Betätiger zum Betätigen der Pendelsperre (30) in Abhängigkeit eines Signals einer Erfassungseinrichtung zum Erfassen des Aufwippens des Querrahmens (6) aufweist.

6. Landwirtschaftliches Anbaugerät nach einem der vorhergehenden Ansprüche, wobei das Fahrwerk (3) einen Stellaktor (26) zum Absenken der hinteren Radachse (24) und/oder Anheben der vorderen Radachse aufweist und die Verstellvorrichtung (25) eine Steuervorrichtung (27) zum Steuern des Stellaktors in Abhängigkeit eines Signals, das das Aufwippen des Querrahmens (6) angibt, aufweist.

7. Landwirtschaftliches Anbaugerät nach den Ansprüchen 5 und 6, wobei die Pendelsperre (30) und der Stellaktor (26) zum Absenken und/oder Anheben einer Radachse von zumindest einem Druckmittelaktor gebildet sind, der einerseits am Achsträger (21) des Pendelfahrwerks angelenkt und andererseits am Maschinenrahmen (2) oder einem damit verbundenen Aufhängungsteil angelenkt ist, wobei der genannte Druckmittelzylinder von der Verstellvorrichtung (25) in einem Aufwippmodus in einer Aufwippstellung fahrbar ist, in der der Achsträger (21) in eine Pendelstellung geschwenkt und gehalten ist, in der die hintere und/oder näher am Querrahmen (6) liegende Radachse (24) mehr Radlast trägt als eine vordere und/oder vom Querrahmen (6) entferntere Radachse (23).

8. Landwirtschaftliches Anbaugerät nach einem der vorhergehenden Ansprüche, wobei die Verstellvorrichtung (25) eine Steuervorrichtung zum Betätigen des Stellaktors (26) in Abhängigkeit eines Betriebszustands eines Aufwippantriebs zum Aufwippen des Querrahmens (6) aufweist.

9. Landwirtschaftliches Anbaugerät nach dem vorhergehenden Anspruch, wobei die Steuervorrichtung eine Drucksteuervorrichtung zum Betätigen des Stellaktors (26) in Abhängigkeit eines Drucks, mit dem ein Aufwippzylinder (11) zum Aufwippen des Querrahmens (6) beaufschlagt wird, aufweist.

## Claims

1. Agricultural attachment, in particular soil cultivation device, comprising a central machine frame (2) which is supported on the ground on a rear frame part (2h) by a chassis (3) with several wheel axles (23, 24) and, on a front frame part (2v), is connected with an attachment device (4), in particular drawbar (5), for attachment to a tractor, wherein a transverse frame (6) is attached to the rear frame part (2h), which carries at least one row of working units (7) and which can be luffed up from a lowered working position, in which the transverse frame (6) projects laterally transverse to the direction of travel, about a horizontal luffing axis (10) with respect to the machine frame (2) and can be folded-in about an upright folding axis to a transport position approximately parallel to the direction of travel on the machine frame (2), wherein the chassis (3) is assigned an adjustment device (25) which is configured, depending of an actuation and/or position of the transverse frame (6) to adjust the chassis (3) and to make a wheel axle (24) closer to the transverse frame (6) to the fixed contact point in order to provide an unequal axle load distribution when the transverse frame (6) is luffed-up and folded-in, and to apply more load to a rear wheel axle (24) closer to the transverse frame (6) than to a front wheel axle (23) further away from the transverse frame (6).

2. Agricultural attachment according to the preceding claim, wherein the adjustment device (25) is configured to provide the unequal axle load distribution only temporarily during luffing-up and folding-in the transverse frame (6) into the transport position, and in the completely attained transport position of the transverse frame (6) to provide an equal load distribution to the multiple wheel axles (23, 24).

3. Agricultural attachment according to one of the preceding claims, wherein at least one of the wheel axles (23, 24) is mounted such that it can be raised and lowered and the adjustment device (25) is configured to raise said wheel axle and/or lower the other wheel axle when the transverse frame (6) is luffed up.

4. Agricultural attachment according to one of the preceding claims, wherein the chassis (3) is designed as a pendulum chassis, the axle carrier (21) of which carrying the wheel axles (23, 24) is hinged in a pendulum manner on the machine frame (2), wherein the adjustment device (25) comprises a pendulum lock (30) for blocking the pendulum movement of the axle carrier (21).

5. Agricultural attachment according to one of the preceding claims, wherein the adjustment device (25) comprises an actuator for actuating the pendulum lock (30) depending on a signal of a detection device for detecting the luffing-up of the transverse frame (6).

6. Agricultural attachment according to one of the preceding claims, wherein the chassis (3) comprises an actuator (26) for lowering the rear wheel axle (24) and/or raising the front wheel axle and the adjustment device (25) comprises a control device (27) for controlling the actuator depending on a signal that indicates the luffing-up of the transverse frame (6).

7. Agricultural attachment according to claims 5 and 6, wherein the pendulum lock (30) and the actuator (26) for lowering and/or raising a wheel axle are formed by at least one pressure medium actuator which is hinged on the one hand on the axle carrier (21) of the pendulum chassis and on the other hand on the machine frame (2) or a suspension part connected thereto, wherein the pressure medium cylinder can be moved by the adjustment device (25) in a luffing-up mode in a luffing-up position in which the axle carrier (21) is pivoted and held in a pendulum position in which the wheel axle (24) on the rear and/or or closer to the transverse frame (6) carries more wheel load than a wheel axle (23) on the front and/or further away from the transverse frame (6).

8. Agricultural attachment according to one of the preceding claims, wherein the adjustment device (25) comprises a control device for actuating the actuator (26) depending on an operating state of a luffing-up drive for luffing-up the transverse frame (6).

9. Agricultural attachment according to the preceding claim, wherein the control device comprises a pressure control device for actuating the actuator (26) depending on a pressure applied to a luffing cylinder (11) for luffing-up the transverse frame (6).

## Revendications

1. Equipement auxiliaire agricole, en particulier appareil de traitement des sols, avec un châssis de machine central (2), qui prend appui sur le sol par un train de roulement (3) avec plusieurs essieux de roue (23, 24) sur une partie de châssis arrière (2h) et est relié sur une partie de châssis avant (2v) à un dispositif auxiliaire (4), en particulier un timon (5), destiné à être monté sur un tracteur, dans lequel un châssis transversal (6) est monté sur la partie de châssis arrière (2h), qui supporte au moins une rangée de modules de travail (7), et peut être basculé par rapport au châssis de machine (2) autour d'un axe de basculement horizontal (10) depuis une position de travail abaissée, dans laquelle le châssis transversal (6) est en porte-à-faux latéralement de manière transversale par rapport à la direction de déplacement, et peut être rabattu sur le châssis de machine (2) autour d'un axe de rabattement vertical dans une position de transport à peu près parallèle à la direction de déplacement, dans lequel est associé au train de roulement (3) un dispositif d'ajustement (25), qui est réalisé de manière à fonctionner en fonction d'un actionnement et/ou d'une position du bâti transversal (6) pour ajuster le train de roulement (3) et pour faire d'un essieu de roue arrière (24) situé davantage à proximité sur le châssis transversal (6) un point d'appui fixe pour prévoir une répartition de charge axiale non homogène lors du basculement et du rabattement du châssis transversal (6) et pour contraindre plus fortement l'essieu de roue arrière (24) situé davantage à proximité sur le châssis transversal (6) qu'un essieu de roue avant (23) situé de manière plus éloignée du châssis transversal (6).

2. Equipement auxiliaire agricole selon la revendication précédente, dans lequel le dispositif d'ajustement (25) est réalisé pour prévoir la répartition de charge axiale non homogène seulement temporairement pendant le basculement et le rabattement du châssis transversal (6) dans la position de transport et pour prévoir, dans la position de transport totalement atteint du châssis transversal (6), une répartition de charge homogène sur les plusieurs essieux de roue (23, 24).

3. Equipement auxiliaire agricole selon l'une quelconque des revendications précédentes, dans lequel au moins un des essieux de roue (23, 24) est monté de manière à pouvoir être soulevé et abaissé et le dispositif d'ajustement (25) est réalisé pour soulever ledit essieu de roue et/ou pour abaisser l'autre essieu de roue lors du basculement du châssis transversal (6).

4. Equipement auxiliaire agricole selon l'une quelconque des revendications précédentes, dans lequel le train de roulement (3) est réalisé en tant qu'un train de roulement pendulaire, dont un support de roue (21) supportant les essieux de roue (23, 24) est articulé de manière pendulaire sur le châssis de machine (2), dans lequel le dispositif d'ajustement (25) présente un relais antipompage (30) pour bloquer le déplacement pendulaire du support d'essieu (21).

5. Equipement auxiliaire agricole selon la revendication précédente, dans lequel le dispositif d'ajustement (25) présente un système d'activation pour activer le relais antipompage (30) en fonction d'un signal d'un système de détection destiné à détecter le basculement du châssis transversal (6).

6. Equipement auxiliaire agricole selon l'une quelconque des revendications précédentes, dans lequel le train de roulement (3) présente un actionneur de réglage (26) destiné à abaisser l'essieu de roue arrière (24) et/ou à soulever l'essieu de roue avant, et le dispositif d'ajustement (25) présente un dispositif de commande (27) destiné à commander l'actionneur de réglage en fonction d'un signal, qui indique le basculement du châssis transversal (6).

7. Equipement auxiliaire agricole selon les revendications 5 et 6, dans lequel le relais antipompage (30) et l'actionneur de réglage (26) sont formés pour abaisser et/ou relever un essieu de roue d'au moins un actionneur à moyen de pression, qui est articulé d'une part sur le support d'essieu (21) du train de roulement pendulaire et est articulé d'autre part sur le châssis de machine (2) ou une partie d'attelage reliée à celui-ci, dans lequel ledit cylindre à moyen sous pression peut être déplacé par le dispositif d'ajustement (25) dans un mode de basculement ans une position de basculement, dans laquelle le support d'essieu (21) est pivoté et maintenu dans une position pendulaire, dans laquelle l'essieu de roue arrière (24) et/ou situé davantage à proximité sur le châssis transversal (6) supporte une plus grande charge de roue qu'un essieu de roue avant (23) et/ou plus éloigné du châssis transversal (6).

8. Equipement auxiliaire agricole selon l'une quelconque des revendications précédentes, dans lequel le dispositif d'ajustement (25) présente un dispositif de commande destiné à activer l'actionneur de réglage (26) en fonction d'un état de fonctionnement d'un entraînement de basculement destiné à faire basculer le châssis transversal (6).

9. Equipement auxiliaire agricole selon la revendication précédente, dans lequel le dispositif de commande présente un dispositif de commande de pression destiné à activer l'actionneur de réglage (26) en fonction d'une pression, à l'action de laquelle un cylindre de basculement (11) est soumis pour faire basculer le châssis transversal (6).
